# EUROPEAN PATENT SPECIFICATION

(11) **EP 3 247 069 B1**
(45) Date of publication and mention of the grant of the patent: **06.05.2020**
(21) Application number: 15877581.7
(22) Date of filing: 14.07.2015
(51) Int. Cl.: H04J 3/06

(54) **METHOD, DEVICE, SYSTEM, AND STORAGE MEDIUM FOR IMPLEMENTING TIME SYNCHRONIZATION IN OPTICAL TRANSPORT NETWORK**
VERFAHREN, VORRICHTUNG, SYSTEM UND SPEICHERMEDIUM ZUR UMSETZUNG VON ZEITSYNCHRONISATION IN EINEM OPTISCHEN TRANSPORTNETZWERK
PROCÉDÉ, DISPOSITIF, SYSTÈME ET SUPPORT DE STOCKAGE POUR METTRE EN UVRE UNE SYNCHRONISATION DANS LE TEMPS DANS UN RÉSEAU DE TRANSPORT OPTIQUE

(30) Priority: 16.01.2015 CN 201510023621
(43) Date of publication of application: 22.11.2017
(73) Proprietor: Sanechips Technology Co., Ltd., Shenzhen, Guangdong 518055 (CN)
(72) Inventor: CHEN, Zongzheng, Shenzhen, Guangdong 518055 (CN)
(74) Representative: Baudler, Ron
(86) International application number: PCT/CN2015/083984
(87) International publication number: WO 2016/112666

(56) References cited:
- EP-A1- 2 448 168
- EP-A2- 2 595 331
- WO-A1-2010/122377
- CN-A- 102 957 528
- CN-A- 103 078 699
- CN-A- 104 602 141
- US-A1- 2012 275 317
- US-A1- 2013 128 903

## Description

### TECHNICAL FIELD

The present invention relates to an Optical Transport Network (OTN) transmission technology, and in particular to a method, device, system, and computer storage medium for implementing time synchronization in an OTN.

### BACKGROUND

With the development of communication networks, the OTN predominates in transmission networks, and becomes a platform for bearing a variety of services. Many services have a high requirement on time synchronization. The OTN, as a main body for bearing services, is required to ensure a correct transfer of time synchronization protocols.

WO 2010/122377 A1 discloses an improved method for implementing inter-operating between NTP and IEEE-1588 protocol domains by means of ADD and DROP elements for providing NTP on-path-support.

EP 2595331A2 relates to a communication apparatus for performing time synchronization between a local apparatus and other apparatuses by transmitting/receiving a packet for time synchronization.

The IEEE1588 protocol can provide time synchronization and frequency synchronization uniformly, and can be suitable for a method for interoffice time-frequency transportation among different transport platforms. The main concept of the protocol is using a master-slave clock to code time information, and using network symmetry and delay measurement technology to implement master-slave time synchronization through bidirectional interaction of messages. Thus, to implement high-precision 1588 time synchronization, the following two conditions are necessary: one is that transmission paths are symmetrical; and another is time deviations of main and slave nodes are stable and not allowed to change. If any one of the two conditions is not satisfied, the precision of synchronization is influenced greatly. In the OTN, since an OTN frame is encapsulated, mapped and coded, transmission time of the OTN is not a stable value. So, to implement a function of high-precision 1588 time synchronization in the OTN, unsymmetrical and unstable transmission delay is needed to be avoided.

### SUMMARY

In view of this, the embodiments of the present invention provide methods, devices, system, and computer storage medium for implementing time synchronization in an OTN, which can eliminate an influence caused by asymmetry of an OTN delay and improve the precision of 1588 time synchronization.

To this end, the embodiments of the present invention are implemented as follows.

A method for implementing time synchronization in an OTN is provided, according to appended claim 1.

A method for implementing time synchronization in an OTN is also provided, according to appended claim 3.

A method for implementing time synchronization in an OTN is also provided, according to appended clam 4.

A master device is also provided, according to appended claim 5.

A slave device is also provided, according to appended claim 7.

A system for implementing time synchronization in an OTN is also provided, according to appended claim 9.

A computer storage medium is provided according to appended claim 10.

According to the method, device, system, and computer storage medium for implementing time synchronization in an OTN provided in the embodiments of the present invention, a master device generates a time synchronization message, performs a first correction on a correction domain of the time synchronization message, sends to a slave device the time synchronization message including a first timestamp T1; the slave device performs a second correction on the correction domain of the time synchronization message, and adds a second timestamp T2 to the time synchronization message; the slave device generates a delay request message, performs a third correction on a correction domain of the delay request message, and sends to the master device the delay request message including a third timestamp T3; the master device performs a fourth correction on the correction domain of the delay request message, adds a fourth timestamp T4 to the delay request message, sends to the slave device a delay response message including the fourth timestamp T4 and the correction domain of the delay request message which has been subjected to the fourth correction; the slave device performs time synchronization with the master device according to T1, T2, T3, T4, the correction domain of the time synchronization message, and the correction domain of the delay request message. In such a manner, an influence caused by asymmetry of an OTN delay can be eliminated, and the precision of 1588 time synchronization can be improved.

Any reference to "embodiment(s)" or "aspect(s) of the invention" in this description not falling under the scope of the claims should be interpreted as illustrative example(s) for understanding the invention.

### BRIEF DESCRIPTION OF DRAWINGS

Fig. 1 is a schematic flowchart of a method for implementing time synchronization in an OTN provided in embodiment 1 of the present invention;
Fig. 2 is a schematic flowchart of a method for implementing time synchronization in an OTN provided in embodiment 2 of the present invention;
Fig. 3 is a schematic flowchart of a method for implementing time synchronization in an OTN provided in embodiment 3 of the present invention;
Fig. 4 is a schematic diagram of structure of a master device provided in embodiment 4 of the present invention;
Fig. 5 is a schematic diagram of structure of a slave device provided in embodiment 5 of the present invention; and
Fig. 6 is a schematic diagram of structure of a system for implementing time synchronization in an OTN provided in embodiment 6 of the present invention.

### DETAILED DESCRIPTION

In the embodiments of the present invention, a master device generates a time synchronization message, performs a first correction on a correction domain of the time synchronization message, and sends to a slave device the time synchronization message including a first timestamp T1; the slave device performs a second correction on the correction domain of the time synchronization message, and adds a second timestamp T2 to the time synchronization message. The slave device generates a delay request message, performs a third correction on a correction domain of the delay request message, and sends to the master device the delay request message including a third timestamp T3. The master device performs a fourth correction on the correction domain of the delay request message, adds a fourth timestamp T4 to the delay request message, sends to the slave device a delay response message including the fourth timestamp T4 and the correction domain of the delay request message which has been subjected to the fourth correction. The slave device performs time synchronization with the master device according to T1, T2, T3, T4, the correction domain of the time synchronization message, and the correction domain of the delay request message.

The present invention is further elaborated below based on accompanying drawings and specific embodiments.

### Embodiment 1

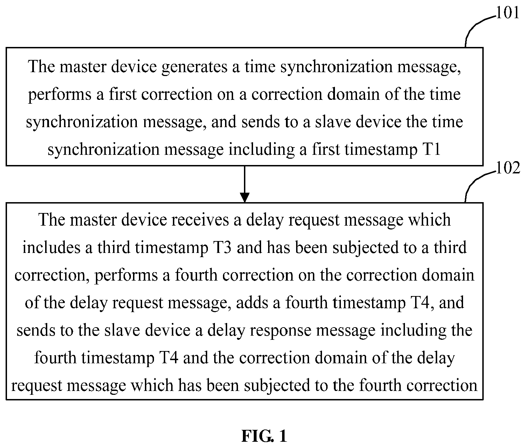

The embodiment of the present embodiment provides a method for implementing time synchronization in an OTN. As shown in Fig. 1, the method includes the following steps.

In step 101, a master device generates a time synchronization message, performs a first correction on a correction domain of the time synchronization message, and sends the time synchronization message including a first timestamp T1 to a slave device.

In an implementation, the master device includes a first time synchronization device and a first service transport device. The first time synchronization device generates the time synchronization message, writes into the time synchronization message the first timestamp T1 at which the time synchronization message is generated, and adds to the correction domain of the time synchronization message a complement of local counting time t1 at which the time synchronization message exits from the first time synchronization device. The first service transport device receives the time synchronization message from the first time synchronization device, adds, to the correction domain of the time synchronization message, local counting time t2 at which the time synchronization message exits from the first service transport device, and sends the time synchronization message out. Here, the local counting time t1 is the time indicated by a local time counter in the first time synchronization device, and the local counting time t2 is the time indicated by a local time counter in the first service transport device.

Sending the time synchronization message to the slave device may be inserting the time synchronization message into reserved overhead of an OTN frame after the time synchronization message is encapsulated by a Generic Framing Procedure-Framed (GFP-F), and sending the time synchronization message to the slave device through the OTN frame.

In step102, the master device receives the delay request message which has been subjected to a third correction and includes a third timestamp T3, performs a fourth correction on a correction domain of the delay request message, adds a fourth timestamp T4 to the delay request message, and sends to the slave device the delay response message including the fourth timestamp T4 and the correction domain of the delay request message which has been subjected to a fourth correction.

In an implementation, the first service transport device receives the delay request message which includes the third timestamp T3 and has been subjected to the third correction, sends the local counting time t3 at which the delay request message is received as well as the delay request message to the first time synchronization device; the first time synchronization device determines local counting time t4 at which the delay request message is received, adds a difference value between t4 and t3 to the correction domain of the delay request message, generates the delay response message, adds the fourth timestamp T4 at which the delay response message is generated and the correction domain of the delay request message to the delay response message, and sends the delay response message to the slave device through the first service transport device. Here, the local counting time t3 is the time indicated by the local time counter in the first service transport device, and the local counting time t4 is the time indicated by the local time counter in the first time synchronization device.

Both the first timestamp T1 and the fourth timestamp T4 may be external GPS time of the master device, or the time of other accurate time source, or the synchronization time in the OTN. The third timestamp T3 may be the clock time of the slave device itself.

### Embodiment 2

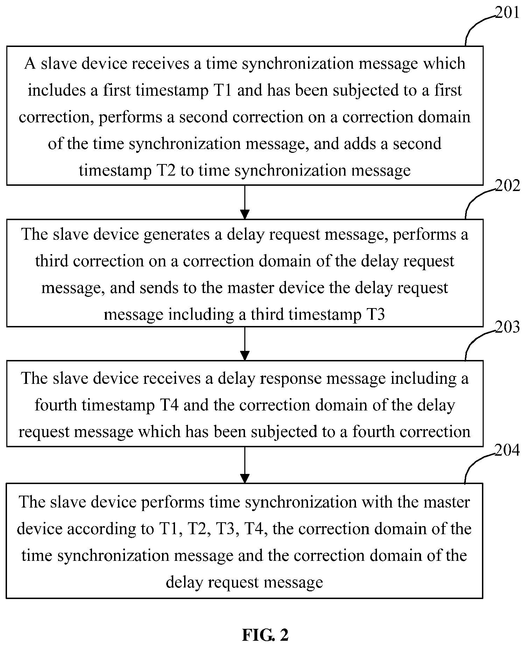

The embodiment of the present embodiment provides a method for implementing time synchronization in an OTN. As shown in Fig. 2, the method includes the following steps.

In step 201, a slave device receives a time synchronization message which has been subjected to a first correction and includes a first timestamp T1, performs a second correction on a correction domain of the time synchronization message, and adds a second timestamp T2 to the time synchronization message.

In an implementation, the slave device includes a second time synchronization device and a second service transport device, The second service transport device receives the time synchronization message which has been subjected to the first correction and includes the first timestamp T1, and sends local counting time t5 at which the time synchronization message is received as well as the time synchronization message to the second time synchronization device. The second time synchronization device determines local counting time t6 at which the time synchronization message is received, adds a difference value between t6 and t5 to the correction domain of the time synchronization message, and adds to the time synchronization message the second timestamp T2 at which the time synchronization message is received. Here, the local counting time t5 is the time indicated by the local time counter in the second service transport device, and the local counting time t6 is the time indicated by the local time counter in the second time synchronization device.

In step 202, the slave device generates a delay request message, performs a third correction on a correction domain of the delay request message, and sends to the master device the delay request message including a third timestamp T3.

In an implementation, the second time synchronization device generates the delay request message, writes into the delay request message the third timestamp T3 at which the delay request message is generated, and adds the complement of local counting time t7 at which the delay request message exits from the second time synchronization device to the correction domain of the delay request message. The second service transport device receives the delay request message from the second time synchronization device, adds local counting time t8 at which the delay request message exits from the second service transport device to the correction domain of the time synchronization message, and sends the delay request message out. Here, the local counting time t7 is the time indicated by the local time counter in the second time synchronization device, and the local counting time t8 is the time indicated by the local time counter in the second service transport device.

In step 203, the slave device receives the delay response message including the fourth timestamp T4 and the correction domain of the delay request message which has been subjected to the fourth correction.

In step 204, the slave device performs time synchronization with the master device according to T1, T2, T3, T4, the correction domain of the time synchronization message, and the correction domain of the delay request message.

In an implementation, the slave device obtains a time deviation between the master device and the slave device according to a formula: [(T2-T1-correction domain of time synchronization message)-(T4-T3-correction domain of delay request message)]/2. The slave device adds the time deviation to the time of the slave device to synchronize the slave device with the master device. The correction domain of the time synchronization message is the one on which the second correction has been performed, and the correction domain of the delay request message is the one on which the fourth correction has been performed.

### Embodiment 3

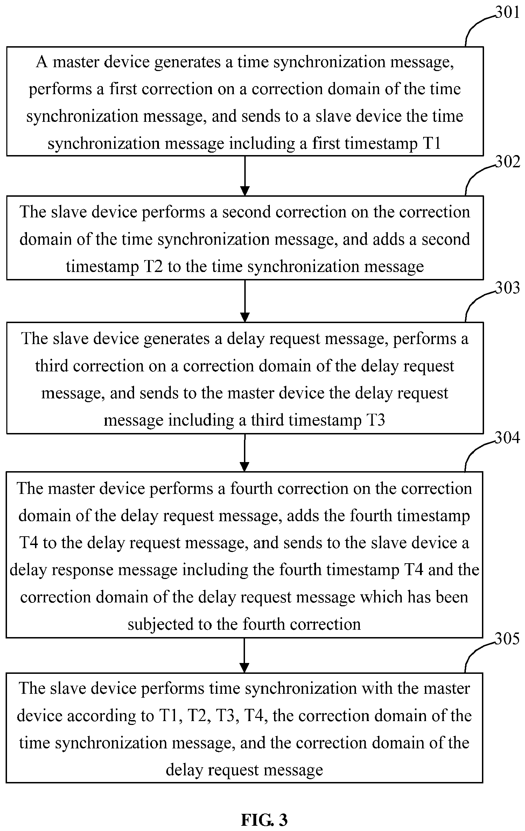

The embodiments of the present embodiment provides a method for implementing time synchronization in an OTN. As shown in Fig. 3, the method includes the following steps.

In step 301, a master device generates a time synchronization message, performs a first correction on a correction domain of the time synchronization message, and sends to a slave device the time synchronization message including a first timestamp T1.

In step 302, the slave device performs a second correction on the correction domain of the time synchronization message, and adds a second timestamp T2 to the time synchronization message.

In step 303, the slave device generates a delay request message, performs a third correction on a correction domain of the delay request message, and sends to the master device the delay request message including the third timestamp T3.

In step 304, the master device performs a fourth correction on the correction domain of the delay request message, adds a fourth timestamp T4 to the delay request message, and sends to the slave device the delay response message including the fourth timestamp T4 and the correction domain of the delay request message which has been subjected to the fourth correction.

In step 305, the slave device performs time synchronization with the master device according to T1, T2, T3, T4, the correction domain of the time synchronization message, and the correction domain of the delay request message.

### Embodiment 4

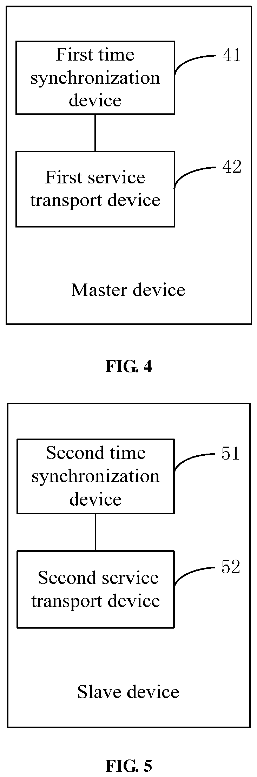

The embodiment of the present embodiment provides a master device. As shown in Fig. 4, the master device includes: a first time synchronization device 41 and a first service transport device 42.

The first time synchronization device 41 is arranged to generate a time synchronization message, write into the time synchronization message a first timestamp T1 at which the time synchronization message is generated, and add, to a correction domain of the time synchronization message, a complement of local counting time t1 at which the time synchronization message exits from the first time synchronization device 41. The first time synchronization device is further arranged to determine local counting time t4 at which a delay request message is received, add to the correction domain of the delay request message a difference value between t4 and local counting time t3 at which the first service transport device 42 receives the delay request message, generate a delay response message, add a fourth timestamp T4 at which the delay response message is generated and the correction domain of the delay request message to the delay response message, and send the delay response message to the slave device through the first service transport device 42.

The first service transport device 42 is arranged to receive the time synchronization message from the first time synchronization device 41, add to the correction domain of the time synchronization message local counting time t2 at which the time synchronization message exits from the first service transport device 42, and send the time synchronization message out. The first service transport device is further arranged to receive the time synchronization message which includes the third timestamp T3 and has been subjected to a correction performed by the slave device, and send to the first time synchronization device 41 the local counting time t3 at which the delay request message is received as well as the delay request message.

The first time synchronization device 41 and the first service transport device 42 each includes a local time counter. The local time counter of the first time synchronization device 41 is arranged to generate the local counting time t1 and the local counting time t4 of the first time synchronization device 41. The local time counter of the first service transport device 42 is arranged to generate the local counting time t2 and the local counting time t3 of the first service transport device 42.

Both the first timestamp T1 and the fourth timestamp T4 may be external GPS time of the master device, or the time of other accurate time source, or the synchronization time in the OTN. The third timestamp T3 may be the clock time of the slave device itself.

In practical applications, both the first time synchronization device 41 and the first service transport device 42 may be realized by a Central Processing Unit (CPU), a Micro Processor Unit (MPU), a Digital Signal Processor (DSP), or a Field Programmable Gate Array (FPGA) in the master device.

### Embodiment 5

The embodiment of the present embodiment provides a slave device. As shown in Fig. 5, the slave device includes a second time synchronization device 51 and a second service transport device 52.

The second service transport device 52 is arranged to receive a time synchronization message which includes a first timestamp T1 and has been subjected to a correction performed by the master device, and send, to the second time synchronization device 51, local counting time t5 at which the time synchronization message is received as well as the time synchronization message. The second service transport device 52 is further arranged to receive a delay request message from the second time synchronization device 51, add, to the correction domain of the time synchronization message, local counting time t8 at which the delay request message exits from the second service transport device 52, send the delay request message out, and receive a delay response message including the fourth timestamp T4 and the correction domain of the delay request message on which the master device has performed correction.

The second time synchronization device 51 is arranged to determine local counting time t6 at which the time synchronization message is received, add a difference value between t6 and t5 to the correction domain of the time synchronization message, and add to the time synchronization message a second timestamp T2 at which the time synchronization message is received. The second time synchronization device is further arranged to generate the delay request message, write into the delay request message a third timestamp T3 at which the delay request message is generated, add the complement of local counting time t7 at which the delay request message exits from the second time synchronization device 51 to the correction domain of the delay request message, and perform time synchronization with the master device according to T1, T2, T3, T4, the correction domain of the time synchronization message, and the correction domain of the delay request message.

The second time synchronization device 51 and the second service transport device 52 each includes a local time counter. The local time counter of the second time synchronization device 51is arranged to generate the local counting time t6 and the local counting time t7 of the second time synchronization device 51. The local time counter of the second service transport device 52 is arranged to generate the local counting time t5 and the local counting time t8 of the second service transport device 52.

Both the first timestamp T1 and the fourth timestamp T4 may be external GPS time of the master device, or the time of other accurate time source, or the synchronization time in the OTN; the third timestamp T3 can be clock time of the slave device itself.

In practical applications, both the second time synchronization device 51 and the second service transport device 52 may be realized by a CPU, an MPU, a DSP or a FPGA in the slave device.

### Embodiment 6

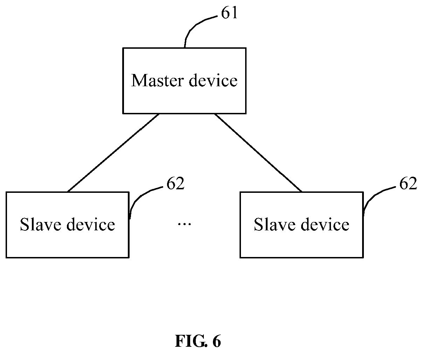

The embodiment of the present embodiment provides a system for implementing time synchronization in an OTN. As shown in Fig. 6, the system includes a master device 61 and a slave device 62.

The master device 61 is arranged to generate a time synchronization message, perform a first correction on a correction domain of the time synchronization message, and send to the slave device 62 the time synchronization message including a first timestamp T1. The master device is further arranged to receive a delay request message which includes a third timestamp T3 and has been subjected to a third correction, perform a fourth correction on a correction domain of the delay request message, add a fourth timestamp T4 to the delay request message, and send to the slave device 62 a delay response message including the fourth timestamp T4 and the correction domain of the delay request message which has been subjected to the fourth correction.

The slave device 62 is arranged to receive the time synchronization message which has been subjected to the first correction and includes the first timestamp T1, perform a second correction on the correction domain of the time synchronization message, and add a second timestamp T2 to the time synchronization message. The slave device is further arranged to generate the delay request message, perform the third correction on the correction domain of the delay request message, and send to the master device the delay request message including the third timestamp T3. The slave device is further arranged to receive the delay response message including the fourth timestamp T4 and the correction domain of the delay request message which has been subjected to the fourth correction, and perform time synchronization with the master device according to T1, T2, T3, T4, the correction domain of the time synchronization message, and the correction domain of the delay request message.

Fig. 4 illustrates the structure of the master device 61 which includes the first time synchronization device 41 and the first service transport device 42.

Fig. 5 illustrates the structure of the slave device 62 which includes the second time synchronization device 51 and the second service transport device 52.

To sum up, as described in the present invention, time synchronization can be realized between a slave device and a master device by determining the OTN time at which a time synchronization message and a delay request message enter and exit from the master device and the slave device, thereby eliminating an influence caused by asymmetry of an OTN delay and improving the precision of 1588 time synchronization.

An embodiment of the present invention also provides a computer storage medium, in which a computer program is stored. The computer program is used for performing the method for implementing time synchronization in an OTN shown in Fig. 1, or Fig. 2, or Fig. 3.

Those skilled in the art should appreciate that the embodiments of the present invention may be provided as a method, a system or a computer program product. The embodiments of the present invention may be in forms of full hardware, full software, or combination of software and hardware. Besides, the embodiments of the present invention may be in the form of a computer program product which is implemented on one or more computer readable storage media including computer executable program codes. The storage media include, but are not limited to, a magnetic disk memory and a Compact Disc-ROM (CD-ROM).

The present invention is described according to the flowcharts and/or block diagrams of the method, the device (system) and the computer program product in the embodiments of the present invention. It is to be understood that each flow and/or block in the flowchart and/or block diagram, and the combination of the flow and/or block in the flowchart and/or block diagram can be implemented by the computer program instructions. These computer program instructions can be provided to the processing unit of a general-purpose computer, a special-purpose computer, an embedded processor or other programmable data processing equipment to generate a machine, so that instructions which are executable by the processing unit of the computer or other programmable data processing equipment may generate a device which is arranged to implement specified functions in one or more flows of a flowchart and/or one or more blocks of a block diagram.

These computer program instructions may also be stored in a computer-readable memory which can guide the computer or other programmable data processing equipment to work in a particular way, so that the instructions stored in the computer-readable memory can generate a product including an instruction device. The instruction device implements the specified functions in one or more flows of the flowchart and/or one or more blocks of the block diagram.

These computer program instructions may also be loaded on a computer or other programmable data processing equipment, so that a series of operation steps are performed on the computer or other programmable data processing equipment to generate the processing which may be implemented by the computer, and the instructions executed on the computer or other programmable data processing equipment may provide the steps for implementing the specified functions in one or more flows of the flowchart and/or one or more blocks of the block diagram.

The above are only embodiments of the present invention and not intended to limit the scope of protection of the present invention.

## Claims

1. A method for implementing time synchronization in an Optical Transport Network, OTN, the method comprises:
generating (101), by a first time synchronization device of a master device, a time synchronization message, writing into the time synchronization message a first timestamp T1 at which the time synchronization message is generated, and adding to a correction domain of the time synchronization message a complement of local counting time t1 at which the time synchronization message exits from the first time synchronization device; receiving, by a first service transport device of the master device, the time synchronization message from the first time synchronization device, adding to the correction domain of the time synchronization message, local counting time t2 at which the time synchronization message exits from the first service transport device, and sending the time synchronization message to a slave device;
receiving (102), by the master device, a delay request message which has been subjected to a third correction and includes a third timestamp T3; sending, by the first service transport device, local counting time t3 at which the delay request message is received as well as the delay request message to the first time synchronization device; and determining, by the first time synchronization device, local counting time t4 at which the delay request message is received, adding a difference value between t4 and t3 to the correction domain of the delay request message, generating the delay response message, adding to the delay response message the fourth timestamp T4 at which the delay response message is generated and the correction domain of the delay request message, and sending the delay response message to the slave device through the first service transport device.

2. The method according to claim 1, wherein sending the time synchronization message to the slave device comprises:
inserting the time synchronization message into reserved overhead of an OTN frame after encapsulating the time synchronization message by a Generic Framing Procedure-Framed, GFP-F, and sending the time synchronization message to the slave device through the OTN frame.

3. A method for implementing time synchronization in an Optical Transport Network, OTN, the method comprises:
receiving (201), by a second service transport device of a slave device, a time synchronization message which has been subjected to a first correction and includes a first timestamp T1, and sending local counting time t5 at which the time synchronization message is received as well as the time synchronization message to a second time synchronization device of the slave device; determining, by the second time synchronization device, local counting time t6 at which the time synchronization message is received, adding a difference value between t6 and t5 to the correction domain of the time synchronization message, and adding to the time synchronization message a second timestamp T2 at which the time synchronization message is received;
generating (202), by the second time synchronization device, a delay request message, writing into the delay request message a third timestamp T3 at which the delay request message is generated, and adding a complement of local counting time t7 at which the delay request message exits from the second time synchronization device to the correction domain of the delay request message; and receiving, by the second service transport device, the delay request message from the second time synchronization device, adding local counting time t8 at which the delay request message exits from the second service transport device to the correction domain of the time synchronization message, and sending the delay request message to a master slave;
receiving (203), by the slave device, a delay response message including a fourth timestamp T4 and the correction domain of the delay request message which has been subjected to a fourth correction; and
performing (204), by the slave device, time synchronization with the master device according to the T1, the T2, the T3, the T4, the correction domain of the time synchronization message and the correction domain of the delay request message.

4. A method for implementing time synchronization in an Optical Transport Network, OTN, the method comprises:
generating (301), by a master device, a time synchronization message, performing a first correction on a correction domain of the time synchronization message, and sending to a slave device the time synchronization message including a first timestamp T1;
performing (302), by the slave device, a second correction on the correction domain of the time synchronization message, and adding a second timestamp T2 to the time synchronization message;
generating (303), by the slave device, a delay request message, performing a third correction on a correction domain of the delay request message, and sending to the master device the delay request message including a third timestamp T3;
performing (304), by the master device, a fourth correction on the correction domain of the delay request message, adding a fourth timestamp T4 to the delay request message, and sending to the slave device a delay response message including the fourth timestamp T4 and the correction domain of the delay request message which has been subjected to the fourth correction; and
performing (305), by the slave device, time synchronization with the master device according to the T1, the T2, the T3, the T4, the correction domain of the time synchronization message and the correction domain of the delay request message;
wherein the step of generating, by the master device, the time synchronization message, performing the first correction on the correction domain of the time synchronization message, and sending to the slave device the time synchronization message including the first timestamp T1 comprises:
generating (101), by the first time synchronization device of the master device, the time synchronization message, writing into the time synchronization message the first timestamp T1 at which the time synchronization message is generated, and adding to the correction domain of the time synchronization message a complement of local counting time t1 at which the time synchronization message exits from the first time synchronization device; receiving, by a first service transport device of the master device, the time synchronization message from the first time synchronization device, adding to the correction domain of the time synchronization message, local counting time t2 at which the time synchronization message exits from the first service transport device, and sending the time synchronization message to the slave device;
the step of performing, by the slave device, the second correction on the correction domain of the time synchronization message, and adding the second timestamp T2 to the time synchronization message comprises:
receiving, by a second service transport device of the slave device, the time synchronization message which has been subjected to the first correction and includes the first timestamp T1, and sending local counting time t5 at which the time synchronization message is received as well as the time synchronization message to a second time synchronization device of the slave device; determining, by the second time synchronization device, local counting time t6 at which the time synchronization message is received, adding a difference value between t6 and t5 to the correction domain of the time synchronization message, and adding to the time synchronization message the second timestamp T2 at which the time synchronization message is received;
the step of generating, by the slave device, the delay request message, performing the third correction on the correction domain of the delay request message, and sending to the master device the delay request message including the third timestamp T3 comprises:
generating, by the second time synchronization device, a delay request message, writing into the delay request message the third timestamp T3 at which the delay request message is generated, and adding a complement of local counting time t7 at which the delay request message exits from the second time synchronization device to the correction domain of the delay request message; and receiving, by the second service transport device, the delay request message from the second time synchronization device, adding local counting time t8 at which the delay request message exits from the second service transport device to the correction domain of the time synchronization message, and sending the delay request message to a master slave;
the step of performing, by the master device, the fourth correction on the correction domain of the delay request message, adding the fourth timestamp T4 to the delay request message, and sending to the slave device the delay response message including the fourth timestamp T4 and the correction domain of the delay request message which has been subjected to the fourth correction comprises:
receiving, by the master device, the delay request message which has been subjected to the third correction and includes the third timestamp T3; sending, by the first service transport device, local counting time t3 at which the delay request message is received as well as the delay request message to the first time synchronization device; and determining, by the first time synchronization device, local counting time t4 at which the delay request message is received, adding a difference value between t4 and t3 to the correction domain of the delay request message, generating the delay response message, adding to the delay response message the fourth timestamp T4 at which the delay response message is generated and the correction domain of the delay request message, and sending the delay response message to the slave device through the first service transport device.

5. A master device, in an Optical Transport Network, the master device comprises: a first time synchronization device (41) and a first service transport device (42), wherein
the first time synchronization device (41) is arranged to generate a time synchronization message, write into the time synchronization message a first timestamp T1 at which the time synchronization message is generated, and add to a correction domain of the time synchronization message a complement of local counting time t1 at which the time synchronization message exits from the first time synchronization device; the first time synchronization device is further arranged to determine local counting time t4 at which a delay request message is received, add to a correction domain of the delay request message a difference value between t4 and local counting time t3 at which the first service transport device receives the delay request message, generate a delay response message, add a fourth timestamp T4 at which the delay response message is generated and the correction domain of the delay request message to the delay response message, and send the delay response message to a slave device through the first service transport device; and
the first service transport device (42) is arranged to receive the time synchronization message from the first time synchronization device, add, to the correction domain of the time synchronization message, local counting time t2 at which the time synchronization message exits from the first service transport device, and send the time synchronization message out; the first service transport device is further arranged to receive the time synchronization message which has been subjected to a correction performed by the slave device and includes a third timestamp T3, and send the local counting time t3 at which the delay request message is received as well as the delay request message to the first time synchronization device.

6. The master device according to claim 5, wherein the first time synchronization device (41) and the first service transport device (42) each comprises a local time counter; the local time counter of the first time synchronization device is arranged to generate the local counting time t1 and the local counting time t4, and the local time counter of the first service transport device is arranged to generate the local counting time t2 and the local counting time t3.

7. A slave device, in an Optical Transport Network,
the slave device comprises: a second time synchronization device (51) and a second service transport device (52); wherein
the second service transport device (52) is arranged to receive a time synchronization message which has been subjected to a correction performed by a master device and includes a first timestamp T1, send local counting time t5 at which the time synchronization message is received as well as the time synchronization message to the second time synchronization device; the second service transport device is further arranged to receive a delay request message from the second time synchronization device, add local counting time t8 at which the delay request message exits from the second service transport device to a correction domain of the time synchronization message, send the delay request message out, and receive a delay response message including a fourth timestamp T4 and a correction domain of the delay request message which has been subjected to a correction performed by the master device; and
the second time synchronization device (51) is arranged to determine local counting time t6 at which the time synchronization message is received, add a difference value between t6 and t5 to the correction domain of the time synchronization message, and add to the time synchronization message a second timestamp T2 at which the time synchronization message is received; the second time synchronization device is further arranged to generate the delay request message, write into the delay request message a third timestamp T3 at which the delay request message is generated, add a complement of local counting time t7 at which the delay request message exits from the second time synchronization device to the correction domain of the delay request message, and perform time synchronization with the master device according to the T1, the T2, the T3, the T4, the correction domain of the time synchronization message and the correction domain of the delay request message.

8. The slave device according to claim 7, wherein the second time synchronization device (51) and the second service transport device (52) each comprises a local time counter; the local time counter of the second time synchronization device is arranged to generate the local counting time t6 and the local counting time t7, and the local time counter of the second service transport device is arranged to the local counting time t5 and the local counting time t8.

9. A system for implementing time synchronization in an Optical Transport Network, OTN, the system comprises: the master device (61) according to claim 5 and the slave device (62) according to claim 7.

10. A computer storage medium, having stored therein computer executable instructions which when executed by a computer, cause the computer to carry out at least one of the method according to claim 1 or 2, the method according to claim 3, and the method according to claim 4.

## Patentansprüche

1. Verfahren zur Implementierung einer Zeitsynchronisation in einem OTN (Optical Transport Network), wobei das Verfahren umfasst:
Erzeugen (101) einer Zeitsynchronisationsnachricht durch eine erste Zeitsynchronisationsvorrichtung einer Master-Vorrichtung, Schreiben eines ersten Zeitstempels T1 in die Zeitsynchronisationsnachricht, zu dem die Zeitsynchronisationsnachricht erzeugt wird, und Hinzufügen einer Ergänzung der lokalen Zählerzeit t1, zu der die Zeitsynchronisationsnachricht aus der ersten Zeitsynchronisationsvorrichtung austritt, zu einer Korrekturdomain der Zeitsynchronisationsnachricht; Empfangen der Zeitsynchronisationsnachricht von der ersten Zeitsynchronisationsvorrichtung durch eine erste Servicetransportvorrichtung der Master-Vorrichtung, Hinzufügen der lokale Zählerzeit t2 zu der Korrekturdomain der Zeitsynchronisationsnachricht, zu der die Zeitsynchronisationsnachricht aus der ersten Servicetransportvorrichtung austritt, und Senden der Zeitsynchronisationsnachricht an eine Slave-Vorrichtung;
Empfangen (102) einer Verzögerungsanfragenachricht durch die Master-Vorrichtung, die einer dritten Korrektur unterzogen wurde und einen dritten Zeitstempel T3 enthält; Senden, der lokalen Zählerzeit t3, zu der die Verzögerungsanfragenachricht durch die erste Servicetransportvorrichtung empfangen wird sowie der Verzögerungsanfragennachricht an die erste Zeitsynchronisationsvorrichtung; und Bestimmen der lokalen Zählerzeit t4, zu der die Verzögerungsanfragenachricht durch die erste Zeitsynchronisationsvorrichtung empfangen wird, Hinzufügen eines Differenzwertes zwischen t4 und t3 zur Korrekturdomain der Verzögerungsanfragenachricht, Erzeugen einer Verzögerungsantwortnachricht, Hinzufügen des vierten Zeitstempels T4, zu der die Verzögerungsantwortnachricht erzeugt wird, und der Korrekturdomain der Verzögerungsanfragenachricht zur Verzögerungsantwortnachricht und Senden der Verzögerungsantwortnachricht an die Slave-Vorrichtung durch die erste Servicetransportvorrichtung.

2. Verfahren nach Anspruch 1, wobei das Senden der Zeitsynchronisationsnachricht an die Slave-Vorrichtung umfasst:
Einfügen der Zeitsynchronisationsnachricht, nach der Einkapselung der Zeitsynchronisationsnachricht durch einen GFP-F (Generic Framing Procedure-Frame), in den reservierten Oberteil eines OTN-Rahmens, und Senden der Zeitsynchronisationsnachricht, über den OTN-Rahmen, an die Slave-Vorrichtung.

3. Verfahren zur Implementierung der Zeitsynchronisation in einem OTN (Optical Transport Network), wobei das Verfahren umfasst:
Empfang (201) einer Zeitsynchronisationsnachricht, durch eine zweite Servicetransportvorrichtung einer Slave-Vorrichtung, die einer ersten Korrektur unterzogen wurde und einen ersten Zeitstempel T1 enthält, und Senden der lokalen Zählerzeit t5, zu der die Zeitsynchronisationsnachricht empfangen wird, sowie der Zeitsynchronisationsnachricht an eine zweite Zeitsynchronisationsvorrichtung der Slave-Vorrichtung;
Bestimmen der lokalen Zählerzeit t6, durch die zweite Zeitsynchronisationsvorrichtung, zu der die Zeitsynchronisationsnachricht empfangen wird, Hinzufügen eines Differenzwertes zwischen t6 und t5 zur Korrekturdomain der Zeitsynchronisationsnachricht, und Hinzufügen eines zweiten Zeitstempels T2, zur Zeitsynchronisationsnachricht, zu dem die Zeitsynchronisationsnachricht empfangen wird;
Erzeugung (202) einer Verzögerungsanfragenachricht durch die zweite Zeitsynchronisationsvorrichtung, Schreiben eines dritten Zeitstempels T3 in die Verzögerungsanfragenachricht, zu dem die Verzögerungsanfragenachricht erzeugt wird, und Hinzufügen einer Ergänzung der lokalen Zählerzeit t7 zur Korrekturdomain der Verzögerungsanfragenachricht, zu der die Verzögerungsanfragenachricht aus der zweiten Zeitsynchronisationsvorrichtung austritt; und Empfangen der Verzögerungsanfragenachricht, durch die zweite Servicetransportvorrichtung, von der zweiten Zeitsynchronisationsvorrichtung, Hinzufügen der lokalen Zählerzeit t8 zur Korrekturdomain der Zeitsynchronisationsnachricht, zu der die Verzögerungsanfragenachricht aus der zweiten Servicetransportvorrichtung austritt, und Senden der Verzögerungsanfragenachricht an einen Master-Slave;
Empfangen (203) einer Verzögerungsantwortnachricht, durch die Slave-Vorrichtung, die einen vierten Zeitstempel T4 und die Korrekturdomain der Verzögerungsanfragenachricht, die einer vierten Korrektur unterzogen wurde, enthält; und
Durchführen (204) einer Zeitsynchronisation, durch die Slave-Vorrichtung, mit der Master-Vorrichtung gemäß der T1, der T2, der T3, der T4, der Korrekturdomain der Zeitsynchronisationsnachricht und der Korrekturdomain der Verzögerungsanfragenachricht.

4. Verfahren zur Implementierung der Zeitsynchronisation in einem OTN (Optical Transport Network), wobei das Verfahren umfasst:
Erzeugen (301) einer Zeitsynchronisationsnachricht, durch eine Master-Vorrichtung, Durchführen einer ersten Korrektur an einer Korrekturdomain der Zeitsynchronisationsnachricht, und Senden der Zeitsynchronisationsnachricht mit einem ersten Zeitstempel T1 an eine Slave-Vorrichtung;
Durchführen (302) einer zweiten Korrektur, durch die Slave-Vorrichtung, in der Korrekturdomain der Zeitsynchronisationsnachricht, und Hinzufügen eines zweiten Zeitstempels T2 zur Zeitsynchronisationsnachricht;
Erzeugung (303) einer Verzögerungsanfragenachricht, durch die Slave-Vorrichtung, Durchführen einer dritten Korrektur in einer Korrekturdomain der Verzögerungsanfragenachricht, und Senden der Verzögerungsanfragenachricht mit einem dritten Zeitstempel T3 an die Master-Vorrichtung;
Durchführen (304) einer vierten Korrektur, durch die Master-Vorrichtung, in der Korrekturdomain der Verzögerungsanfragenachricht, Hinzufügen eines vierten Zeitstempels T4 zu der Verzögerungsanfragenachricht, und Senden einer Verzögerungsantwortnachricht mit dem vierten Zeitstempel T4 und der Korrekturdomain der Verzögerungsanfragenachricht, die der vierten Korrektur unterzogen wurde, an die Slave-Vorrichtung; und
Durchführen (305) der Zeitsynchronisation, durch die Slave-Vorrichtung, mit der Master-Vorrichtung gemäß der T1, der T2, der T3, der T4, der Korrekturdomain der Zeitsynchronisationsnachricht und der Korrekturdomain der Verzögerungsanfragenachricht;
wobei der Schritt des Erzeugens der Zeitsynchronisationsnachricht, des Durchführens der ersten Korrektur in der Korrekturdomain der Zeitsynchronisationsnachricht und des Sendens der Zeitsynchronisationsnachricht, die den ersten Zeitstempel T1 enthält, an die Slave-Vorrichtung, durch die Master-Vorrichtung, umfasst:
Erzeugen (101) der Zeitsynchronisationsnachricht, durch die erste Zeitsynchronisationsvorrichtung der Master-Vorrichtung, Schreiben des ersten Zeitstempels T1, in die Zeitsynchronisationsnachricht, zu dem die Zeitsynchronisationsnachricht erzeugt wird, und Hinzufügen einer Ergänzung der lokalen Zählerzeit t1, zur Korrekturdomain der Zeitsynchronisationsnachricht, zu der die Zeitsynchronisationsnachricht aus der ersten Zeitsynchronisationsvorrichtung austritt; Empfangen der Zeitsynchronisationsnachricht, durch eine erste Servicetransportvorrichtung der Master-Vorrichtung, von der ersten Zeitsynchronisationsvorrichtung, Hinzufügen der lokalen Zählerzeit t2, zur Korrekturdomain der Zeitsynchronisationsnachricht, zu der die Zeitsynchronisationsnachricht aus der ersten Servicetransportvorrichtung austritt, und Senden der Zeitsynchronisationsnachricht an die Slave-Vorrichtung;
wobei der Schritt des Durchführens der zweiten Korrektur in der Korrekturdomain der Zeitsynchronisationsnachricht und des Hinzufügens des zweiten Zeitstempels T2 zur Zeitsynchronisationsnachricht, durch die Slave-Vorrichtung, umfasst:
Empfangen der Zeitsynchronisationsnachricht, durch eine zweite Servicetransportvorrichtung der Slave-Vorrichtung, die der ersten Korrektur unterzogen wurde und den ersten Zeitstempel T1 enthält, und Senden der lokalen Zählerzeit t5, zu der die Zeitsynchronisationsnachricht empfangen wird, sowie der Zeitsynchronisationsnachricht an eine zweite Zeitsynchronisationsvorrichtung der Slave-Vorrichtung;
Bestimmen der lokalen Zählerzeit t6, durch die zweite Zeitsynchronisationsvorrichtung, zu der die Zeitsynchronisationsnachricht empfangen wird, Hinzufügen eines Differenzwertes zwischen t6 und t5 in die Korrekturdomain der Zeitsynchronisationsnachricht, und Hinzufügen des zweiten Zeitstempels T2, zur Zeitsynchronisationsnachricht, zu dem die Zeitsynchronisationsnachricht empfangen wird;
wobei der Schritt des Erzeugens der Verzögerungsanfragenachricht, des Durchführens der dritten Korrektur in der Korrekturdomain der Verzögerungsanfragenachricht und des Sendens der Verzögerungsanfragenachricht, die den dritten Zeitstempel T3 enthält, an die Master-Vorrichtung, durch die Slave-Vorrichtung, umfasst:
Erzeugen einer Verzögerungsanfragenachricht, durch die zweite Zeitsynchronisationsvorrichtung, Schreiben des dritten Zeitstempels T3, in die Verzögerungsanfragenachricht, zu dem die Verzögerungsanfragenachricht erzeugt wird, und Hinzufügen einer Ergänzung der lokalen Zählerzeit t7, zur Korrekturdomain der Verzögerungsanfragenachricht, zu der die Verzögerungsanfragenachricht aus der zweiten Zeitsynchronisationsvorrichtung austritt; und Empfangen der Verzögerungsanfragenachricht, durch die zweite Servicetransportvorrichtung, von der zweiten Zeitsynchronisationsvorrichtung, Hinzufügen der lokalen Zählerzeit t8, zur Korrekturdomain der Zeitsynchronisationsnachricht, zu der die Verzögerungsanfragenachricht aus der zweiten Servicetransportvorrichtung austritt, und Senden der Verzögerungsanfragenachricht an einen Master-Slave;
wobei der Schritt des Durchführens der vierten Korrektur in der Korrekturdomain der Verzögerungsanfragenachricht, des Hinzufügens des vierten Zeitstempels T4 zu der Verzögerungsanfragenachricht und des Sendens der Verzögerungsantwortnachricht, die den vierten Zeitstempel T4 und die Korrekturdomain der Verzögerungsanfragenachricht, die der vierten Korrektur unterzogen wurde, enthält, an die Slave-Vorrichtung, durch die Master-Vorrichtung, umfasst:
Empfangen, durch die Master-Vorrichtung, der Verzögerungsanfragenachricht, die der dritten Korrektur unterzogen wurde und den dritten Zeitstempel T3 enthält; Senden der lokalen Zählerzeit t3, zu der die Verzögerungsanfragenachricht empfangen wird, sowie der Verzögerungsanfragenachricht an die erste Zeitsynchronisationsvorrichtung, durch die erste Servicetransportvorrichtung; und Bestimmen der lokalen Zählerzeit t4, durch die erste Zeitsynchronisationsvorrichtung, zu der die Verzögerungsanfragenachricht empfangen wird, Hinzufügen eines Differenzwertes zwischen t4 und t3 in die Korrekturdomain der Verzögerungsanfragenachricht, Erzeugung der Verzögerungsantwortnachricht, Hinzufügen des vierten Zeitstempels T4, zu dem die Verzögerungsantwortnachricht erzeugt wird, und die Korrekturdomain der Verzögerungsanfragenachricht zur Verzögerungsantwortnachricht, und Senden der Verzögerungsantwortnachricht, über die erste Servicetransportvorrichtung, an die Slave-Vorrichtung.

5. Master-Vorrichtung in einem OTN (Optical Transport Network), wobei die Master-Vorrichtung umfasst: eine erste Zeitsynchronisationsvorrichtung (41) und eine erste Servicetransportvorrichtung (42), wobei
die erste Zeitsynchronisationsvorrichtung (41) angeordnet ist, um eine Zeitsynchronisationsnachricht zu erzeugen, in die Zeitsynchronisationsnachricht einen ersten Zeitstempel T1 zu schreiben, zu dem die Zeitsynchronisationsnachricht erzeugt wird, und in eine Korrekturdomain der Zeitsynchronisationsnachricht eine Ergänzung der lokalen Zählerzeit t1 hinzuzufügen, zu der die Zeitsynchronisationsnachricht aus der ersten Zeitsynchronisationsvorrichtung austritt; die erste Zeitsynchronisationsvorrichtung ferner angeordnet ist, um die lokale Zählerzeit t4, zu der eine Verzögerungsanfragenachricht empfangen wird, zu bestimmen, zu einer Korrekturdomain der Verzögerungsanfragenachricht einen Differenzwert zwischen t4 und der lokalen Zählerzeit t3, zu der die erste Servicetransportvorrichtung die Verzögerungsanfragenachricht empfängt, hinzuzufügen, eine Verzögerungsantwortnachricht zu erzeugen, einen vierten Zeitstempel T4, zu dem die Verzögerungsantwortnachricht erzeugt wird, und die Korrekturdomain der Verzögerungsanfragenachricht zu der Verzögerungsantwortnachricht hinzuzufügen und die Verzögerungsantwortnachricht, über die erste Servicetransportvorrichtung, an eine Slave-Vorrichtung zu senden; und
die erste Servicetransportvorrichtung (42) angeordnet ist, um die Zeitsynchronisationsnachricht von der ersten Zeitsynchronisationsvorrichtung zu empfangen, der Korrekturdomain der Zeitsynchronisationsnachricht eine lokale Zählerzeit t2 hinzuzufügen, zu der die Zeitsynchronisationsnachricht aus der ersten Servicetransportvorrichtung austritt, und die Zeitsynchronisationsnachricht auszusenden; die erste Servicetransportvorrichtung ferner angeordnet ist, um die Zeitsynchronisationsnachricht, die einer, von der Slave-Vorrichtung, durchgeführten Korrektur unterzogen wurde und einen dritten Zeitstempel T3 enthält, zu empfangen und die lokale Zählerzeit t3, zu der die Verzögerungsanfragenachricht empfangen wird, sowie die Verzögerungsanfragenachricht an die erste Zeitsynchronisationsvorrichtung zu senden.

6. Master-Vorrichtung nach Anspruch 5, wobei die erste Zeitsynchronisationsvorrichtung (41) und die erste Servicetransportvorrichtung (42) jeweils einen lokalen Zeitzähler umfassen; wobei der lokale Zeitzähler der ersten Zeitsynchronisationsvorrichtung angeordnet ist, um die lokale Zählerzeit t1 und die lokale Zählerzeit t4 zu erzeugen, und der lokale Zeitzähler der ersten Servicetransportvorrichtung angeordnet ist, um die lokale Zählerzeit t2 und die lokale Zählerzeit t3 zu erzeugen.

7. Slave-Vorrichtung in einem OTN (Optical Transport Network), wobei die Slave-Vorrichtung umfasst: eine zweite Zeitsynchronisationsvorrichtung (51) und eine zweite Servicetransportvorrichtung (52); wobei
die zweite Servicetransportvorrichtung (52) angeordnet ist, um eine Zeitsynchronisationsnachricht zu empfangen, die einer, von einer Master-Vorrichtung, durchgeführten Korrektur unterzogen wurde und einen ersten Zeitstempel T1 enthält, eine lokale Zählerzeit t5, zu der die Zeitsynchronisationsnachricht empfangen wird, sowie die Zeitsynchronisationsnachricht an die zweite Zeitsynchronisationsvorrichtung zu senden; die zweite Servicetransportvorrichtung ferner angeordnet ist, um eine Verzögerungsanfragenachricht, von der zweiten Zeitsynchronisationsvorrichtung, zu empfangen, eine lokale Zählerzeit t8, zu der die Verzögerungsanfragenachricht aus der zweiten Servicetransportvorrichtung austritt, zu einer Korrekturdomain der Zeitsynchronisationsnachricht, hinzuzufügen, die Verzögerungsanfragenachricht auszusenden und eine Verzögerungsantwortnachricht zu empfangen, die einen vierten Zeitstempel T4 und eine Korrekturdomain der Verzögerungsanfragenachricht enthält, die einer, von der Master-Vorrichtung, durchgeführten Korrektur unterzogen wurde; und
die zweite Zeitsynchronisationsvorrichtung (51) angeordnet ist, um die lokale Zählerzeit t6 zu bestimmen, zu der die Zeitsynchronisationsnachricht empfangen wird, einen Differenzwert zwischen t6 und t5 in die Korrekturdomain der Zeitsynchronisationsnachricht hinzuzufügen, und der Zeitsynchronisationsnachricht einen zweiten Zeitstempel T2 hinzuzufügen, zu dem die Zeitsynchronisationsnachricht empfangen wird; die zweite Zeitsynchronisationsvorrichtung ferner angeordnet ist, um die Verzögerungsanfragenachricht zu erzeugen, in die Verzögerungsanfragenachricht einen dritten Zeitstempel T3 zu schreiben, zu dem die Verzögerungsanfragenachricht erzeugt wird, eine Ergänzung der lokalen Zählerzeit t7, zu der die Verzögerungsanfragenachricht aus der zweiten Zeitsynchronisationsvorrichtung austritt, zu der Korrekturdomain der Verzögerungsanfragenachricht hinzuzufügen und eine Zeitsynchronisation, mit der Master-Vorrichtung, gemäß der T1, der T2, der T3, der T4, der Korrekturdomain der Zeitsynchronisationsnachricht und der Korrekturdomain der Verzögerungsanfragenachricht durchzuführen.

8. Slave-Vorrichtung nach Anspruch 7, wobei die zweite Zeitsynchronisationsvorrichtung (51) und die zweite Servicetransportvorrichtung (52) jeweils einen lokalen Zeitzähler umfassen; wobei der lokale Zeitzähler der zweiten Zeitsynchronisationsvorrichtung angeordnet ist, um die lokale Zählerzeit t6 und die lokale Zählerzeit t7 zu erzeugen, und der lokale Zeitzähler der zweiten Service-Transportvorrichtung angeordnet ist, um die lokale Zählerzeit t5 und die lokale Zählerzeit t8 zu erzeugen.

9. System zur Implementierung der Zeitsynchronisation in einem OTN (Optical Transport Network), wobei das System umfasst: die Master-Vorrichtung (61) nach Anspruch 5 und die Slave-Vorrichtung (62) nach Anspruch 7.

10. Computerspeichermedium mit darin gespeicherten computerausführbaren Befehlen, die, wenn sie von einem Computer ausgeführt werden, den Computer veranlassen, mindestens eines der Verfahren nach Anspruch 1 oder 2, das Verfahren nach Anspruch 3 und das Verfahren nach Anspruch 4 auszuführen.

## Revendications

1. Procédé de mise en œuvre de la synchronisation temporelle dans un OTN (Optical Transport Network), lequel comprend :
générer (101), par un premier dispositif de synchronisation temporelle d'un dispositif maître, un message de synchronisation temporelle, écrire dans le message de synchronisation temporelle une première estampille temporelle T1 à laquelle le message de synchronisation temporelle est généré, et ajouter à un domaine de correction du message de synchronisation temporelle un complément de temps de comptage local t1 auquel le message de synchronisation temporelle sort du premier dispositif de synchronisation temporelle ; recevoir, par un premier dispositif de transport de service du dispositif maître, le message de synchronisation temporelle du premier dispositif de synchronisation temporelle, ajouter au domaine de correction du message de synchronisation temporelle, un temps de comptage local t2 auquel le message de synchronisation temporelle sort du premier dispositif de transport de service, et envoyer le message de synchronisation temporelle à un dispositif esclave ;
recevoir (102), par l'appareil maître, un message de demande de délai qui a été soumis à une troisième correction et comprend une troisième estampille temporelle T3 ; envoyer, par le premier dispositif de transport de service, le temps de comptage local t3 auquel le message de demande de délai est reçu ainsi que le message de demande de délai au premier dispositif de synchronisation temporelle ; et déterminer, par le premier dispositif de synchronisation temporelle, le temps de comptage local t4 auquel le message de demande de délai est reçu, ajouter une valeur de différence entre t4 et t3 au domaine de correction du message de demande de délai, générer le message de réponse de délai, ajouter au message de réponse de délai la quatrième estampille temporelle T4 à laquelle le message de réponse de délai est généré et le domaine de correction du message de demande de délai, et envoyer le message de réponse de délai au dispositif esclave par l'intermédiaire du premier dispositif de transport de service.

2. Procédé selon la revendication 1, dans lequel la transmission du message de synchronisation temporelle au dispositif esclave comprend :
insérer le message de synchronisation temporelle dans le sur-débit réservé d'une trame OTN après avoir encapsulé le message de synchronisation temporelle par une GFP-F (Generic Framing Procedure-Framed) et envoyer le message de synchronisation temporelle au dispositif esclave par l'intermédiaire de la trame OTN.

3. Procédé de mise en oeuvre de la synchronisation temporelle dans un OTN (Optical Transport Network), lequel comprend :
recevoir (201), par un deuxième dispositif de transport de service d'un dispositif esclave, un message de synchronisation temporelle qui a été soumis à une première correction et comprend une première estampille temporelle T1, et envoyer le temps de comptage local t5 auquel le message de synchronisation temporelle est reçu ainsi que le message de synchronisation temporelle à un deuxième dispositif de synchronisation temporelle du dispositif esclave ;
déterminer, par le deuxième dispositif de synchronisation temporelle, le temps de comptage local t6 auquel le message de synchronisation temporelle est reçu, ajouter une valeur de différence entre t6 et t5 au domaine de correction du message de synchronisation temporelle, et ajouter au message de synchronisation temporelle une deuxième estampille temporelle T2 à laquelle le message de synchronisation temporelle est reçu ;
générer (202), par le deuxième dispositif de synchronisation temporelle, un message de demande de délai, écrire dans le message de demande de délai une troisième estampille temporelle T3 à laquelle le message de demande de délai est généré, et ajouter au domaine de correction du message de demande de délai un complément du temps de comptage local t7 auquel le message de demande de délai sort du deuxième dispositif de synchronisation temporelle ; et recevoir, par le deuxième dispositif de transport de service, le message de demande de délai du deuxième dispositif de synchronisation temporelle, ajouter le temps de comptage local t8 auquel le message de demande de délai sort du deuxième dispositif de transport de service au domaine de correction du message de synchronisation temporelle, et envoyer le message de demande de délai à un esclave maître ;
recevoir (203), par le dispositif esclave, un message de réponse de délai comprenant une quatrième estampille temporelle T4 et le domaine de correction du message de demande de délai qui a été soumis à une quatrième correction ; et
exécuter (204), par le dispositif esclave, la synchronisation temporelle avec le dispositif maître selon le T1, le T2, le T3, le T4, le domaine de correction du message de synchronisation temporelle et le domaine de correction du message de demande de délai.

4. Procédé de mise en oeuvre de la synchronisation temporelle dans un OTN (Optical Transport Network), lequel comprend :
générer (301), par un dispositif maître, un message de synchronisation temporelle, effectuer une première correction sur un domaine de correction du message de synchronisation temporelle, et envoyer à un dispositif esclave le message de synchronisation temporelle comprenant une première estampille T1 ;
effectuer (302), par le dispositif esclave, une seconde correction du domaine de correction du message de synchronisation temporelle, et ajouter une seconde estampille T2 au message de synchronisation temporelle ;
générer (303), par le dispositif esclave, un message de demande de délai, effectuer une troisième correction du domaine de correction du message de demande de délai, et envoyer au dispositif maître le message de demande de délai comprenant une troisième estampille temporelle T3 ;
exécuter (304), par le dispositif maître, une quatrième correction du domaine de correction du message de demande de délai, ajouter une quatrième estampille temporelle T4 au message de demande de délai, et envoyer au dispositif esclave un message de réponse de délai comprenant la quatrième estampille temporelle T4 et le domaine de correction du message de demande de délai qui a été soumis à la quatrième correction ; et
effectuer (305), par le dispositif esclave, la synchronisation temporelle avec le dispositif maître selon le T1, le T2, le T3, le T4, le domaine de correction du message de synchronisation temporelle et le domaine de correction du message de demande de délai ;
dans lequel l'étape consistant à générer, par le dispositif maître, le message de synchronisation temporelle, à effectuer la première correction du domaine de correction du message de synchronisation temporelle, et à envoyer au dispositif esclave le message de synchronisation temporelle comprenant la première estampille temporelle T1 comprend :
générer (101), par le premier dispositif de synchronisation temporelle du dispositif maître, le message de synchronisation temporelle, écrire dans le message de synchronisation temporelle la première estampille temporelle T1 à laquelle le message de synchronisation temporelle est généré, et ajouter au domaine de correction du message de synchronisation temporelle un complément du temps de comptage local t1 auquel le message de synchronisation temporelle sort du premier dispositif de synchronisation temporelle ; recevoir, par un premier dispositif de transport de service du dispositif maître, le message de synchronisation temporelle du premier dispositif de synchronisation temporelle, ajouter au domaine de correction du message de synchronisation temporelle, le temps de comptage local t2 auquel le message de synchronisation temporelle sort du premier dispositif de transport de service, et envoyer le message de synchronisation temporelle au dispositif esclave ;
l'étape consistant à effectuer, par le dispositif esclave, la deuxième correction du domaine de correction du message de synchronisation temporelle, et à ajouter la deuxième estampille temporelle T2 au message de synchronisation temporelle comprend :
recevoir, par un deuxième dispositif de transport de service du dispositif esclave, le message de synchronisation temporelle qui a été soumis à la première correction et comprend la première estampille temporelle T1, et envoyer le temps de comptage local t5 auquel le message de synchronisation temporelle est reçu ainsi que le message de synchronisation temporelle à un deuxième dispositif de synchronisation temporelle du dispositif esclave ;
déterminer, par le deuxième dispositif de synchronisation temporelle, le temps de comptage local t6 auquel le message de synchronisation temporelle est reçu, ajouter une valeur de différence entre t6 et t5 au domaine de correction du message de synchronisation temporelle, et ajouter au message de synchronisation temporelle la deuxième estampille temporelle T2 à laquelle le message de synchronisation temporelle est reçu ;
l'étape consistant à générer, par le dispositif esclave, le message de demande de délai, à effectuer la troisième correction du domaine de correction du message de demande de délai, et à envoyer au dispositif maître le message de demande de délai comprenant la troisième estampille T3 comprend :
générer, par le deuxième dispositif de synchronisation temporelle, un message de demande de délai, écrire dans le message de demande de délai la troisième estampille temporelle T3 à laquelle le message de demande de délai est généré, et ajouter au domaine de correction du message de demande de délai un complément du temps de comptage local t7 auquel le message de demande de délai sort du deuxième dispositif de synchronisation temporelle ; et recevoir, par le deuxième dispositif de transport de service, le message de demande de délai du deuxième dispositif de synchronisation temporelle, ajouter le temps de comptage local t8 auquel le message de demande de délai sort du deuxième dispositif de transport de service au domaine de correction du message de synchronisation temporelle, et envoyer le message de demande de délai à un esclave maître ;
l'étape consistant à effectuer, par le dispositif maître, la quatrième correction du domaine de correction du message de demande de délai, à ajouter la quatrième estampille temporelle T4 au message de demande de délai, et à envoyer au dispositif esclave le message de réponse de délai comprenant la quatrième estampille temporelle T4 et le domaine de correction du message de demande de délai qui a été soumis à la quatrième correction comprend :
recevoir, par le dispositif maître, le message de demande de délai qui a été soumis à la troisième correction et qui comprend la troisième estampille temporelle T3 ; envoyer, par le premier dispositif de transport de service, le temps de comptage local t3 auquel le message de demande de délai est reçu ainsi que le message de demande de délai au premier dispositif de synchronisation temporelle ; et déterminer, par le premier dispositif de synchronisation temporelle, le temps de comptage local t4 auquel le message de demande de délai est reçu, ajouter une valeur de différence entre t4 et t3 au domaine de correction du message de demande de délai, générer le message de réponse de délai, ajouter au message de réponse de délai la quatrième estampille temporelle T4 à laquelle le message de réponse de délai est généré et le domaine de correction du message de demande de délai, et envoyer le message de réponse de délai au dispositif esclave par le premier dispositif de transport de service.

5. Dispositif maître, dans un OTN (Optical Transport Network), lequel comprend : un premier dispositif de synchronisation temporelle (41) et un premier dispositif de transport de service (42), dans lesquels :
le premier dispositif de synchronisation temporelle (41) est agencé pour générer un message de synchronisation temporelle, écrire dans le message de synchronisation temporelle une première estampille temporelle T1 à laquelle le message de synchronisation temporelle est généré, et ajouter à un domaine de correction du message de synchronisation temporelle un complément du temps de comptage local t1 auquel le message de synchronisation temporelle sort du premier dispositif de synchronisation temporelle ; le premier dispositif de synchronisation temporelle est en outre agencé pour déterminer le temps de comptage local t4 auquel un message de demande de délai est reçu, ajouter à un domaine de correction du message de demande de délai une valeur de différence entre t4 et le temps de comptage local t3 auquel le premier dispositif de transport de service reçoit le message de demande de délai, générer un message de réponse de délai, ajouter au message de réponse de délai une quatrième estampille temporelle T4 à laquelle le message de réponse de délai est généré et le domaine de correction du message de demande de délai, et envoyer le message de réponse de délai à un dispositif esclave par l'intermédiaire du premier dispositif de transport de service ; et
le premier dispositif de transport de service (42) est agencé pour recevoir le message de synchronisation temporelle du premier dispositif de synchronisation temporelle, ajouter, au domaine de correction du message de synchronisation temporelle, le temps de comptage local t2 auquel le message de synchronisation temporelle sort du premier dispositif de transport de service, et envoyer le message de synchronisation temporelle ; le premier dispositif de transport de service est en outre agencé pour recevoir le message de synchronisation temporelle qui a été soumis à une correction effectuée par le dispositif esclave et comprend une troisième estampille temporelle T3, et pour envoyer le temps de comptage local t3 auquel le message de demande de délai est reçu ainsi que le message de demande de délai au premier dispositif de synchronisation temporelle.

6. Dispositif maître selon la revendication 5, dans lequel le premier dispositif de synchronisation temporelle (41) et le premier dispositif de transport de service (42) comprennent chacun un compteur de temps local ; le compteur de temps local du premier dispositif de synchronisation temporelle est agencé pour générer le temps de comptage local t1 et le temps de comptage local t4, et le compteur de temps local du premier dispositif de transport de service est agencé pour générer le temps de comptage local t2 et le temps de comptage local t3.

7. Dispositif esclave, dans un OTN (Optical Transport Network), lequel comprend : un deuxième dispositif de synchronisation temporelle (51) et un deuxième dispositif de transport de services (52) ; dans lequel
le deuxième dispositif de transport de service (52) est agencé pour recevoir un message de synchronisation temporelle qui a été soumis à une correction effectuée par un dispositif maître et comprend une première estampille temporelle T1, envoyer le temps de comptage local t5 auquel le message de synchronisation temporelle est reçu ainsi que le message de synchronisation temporelle au deuxième dispositif de synchronisation temporelle le deuxième dispositif de transport de service est en outre agencé pour recevoir un message de demande de délai du deuxième dispositif de synchronisation temporelle, ajouter le temps de comptage local t8 auquel le message de demande de délai sort du deuxième dispositif de transport de service à un domaine de correction du message de synchronisation temporelle, envoyer le message de demande de délai et recevoir un message de réponse de délai comprenant une quatrième estampille temporelle T4 et un domaine de correction du message de demande de délai qui a été soumis à une correction effectuée par le dispositif maître ; et
le deuxième dispositif de synchronisation temporelle (51) est agencé pour déterminer le temps de comptage local t6 auquel le message de synchronisation temporelle est reçu, ajouter une valeur de différence entre t6 et t5 au domaine de correction du message de synchronisation temporelle, et ajouter au message de synchronisation temporelle une deuxième estampille temporelle T2 à laquelle le message de synchronisation temporelle est reçu ; le deuxième dispositif de synchronisation temporelle est en outre agencé pour générer le message de demande de délai, écrire dans le message de demande de délai une troisième estampille temporelle T3 à laquelle le message de demande de délai est généré, ajouter un complément de temps de comptage local t7 auquel le message de demande de délai sort du deuxième dispositif de synchronisation temporelle au domaine de correction du message de demande de délai, et effectuer une synchronisation temporelle avec le dispositif maître selon le T1, le T2, le T3, le T4, le domaine de correction du message de synchronisation temporelle et le domaine de correction du message de demande de délai.

8. Dispositif esclave selon la revendication 7, dans lequel le deuxième dispositif de synchronisation temporelle (51) et le deuxième dispositif de transport de service (52) comprennent chacun un compteur de temps local ; le compteur de temps local du deuxième dispositif de synchronisation temporelle est agencé pour générer le temps de comptage local t6 et le temps de comptage local t7, et le compteur de temps local du deuxième dispositif de transport de service est agencé pour générer le temps de comptage local t5 et le temps de comptage local t8.

9. Système pour mettre en œuvre la synchronisation temporelle dans un OTN (Optical Transport Network), lequel comprend : le dispositif maître (61) selon la revendication 5 et le dispositif esclave (62) selon la revendication 7.

10. Médium de stockage informatique sur lequel sont stockées des instructions exécutables par ordinateur qui, lorsqu'elles sont exécutées par un ordinateur, amènent l'ordinateur à exécuter au moins un des procédés selon la revendication 1 ou 2, le procédé selon la revendication 3 et le procédé selon la revendication 4.
